# EUROPÄISCHE PATENTANMELDUNG

(11) **EP 4 651 438 A1**
(43) Veröffentlichungstag der Anmeldung: **19.11.2025**
(21) Anmeldenummer: 25170420.1
(22) Anmeldetag: 14.04.2025
(51) Int. Cl.: H04L 9/40, H04L 9/32

(54) **VERFAHREN ZUR INTEGRITÄTSSICHERNDEN ÜBERTRAGUNG MINDESTENS EINES MESSDATUMS**

(30) Priorität: 17.05.2024 DE 102024204633
(71) Anmelder: Siemens Aktiengesellschaft, 80333 München (DE)
(72) Erfinder: BODE, Sebastian, 59229 Ahlen (DE)
(74) Vertreter: Siemens Patent Attorneys

(57) **Zusammenfassung**

Die Erfindung betrifft ein Verfahren zur integritätssichernden Übertragung mindestens eines Messdatums von einer Steuervorrichtung an zumindest eine mit der Steuervorrichtung kommunikativ verbundene Zusatzvorrichtung. Diese Übertragung erfolgt kryptographisch ungesichert. Auf Empfängerseite wird das Messdatum bzw. empfangene Messdatensätze oder hieraus abgeleitete Repräsentationen in eine kryptografisch gesicherte Repräsentation überführt. Diese kryptografisch gesicherte Repräsentation kann eine kryptografische Signatur sein, aber auch eine Zusammenfassung des Datensatzes, z. B. in Form eines kryptografischen Hashwertes, welcher sodann über eine sichere Verbindung - nicht notwendigerweise kryptographisch gesicherte Verbindung - übermittelt werden kann. Je nach Ausführungsform umfasst das Verfahren einen ersten Schritt, in dem der Messdatensatz kryptografisch ungesichert übertragen wird und anschließend nach und nach in andere Repräsentationen übergeführt werden, bis schließlich eine kryptografisch gesicherte Repräsentation erzeugt wird, welche mit einer Repräsentation der in der Steuervorrichtung CTR vorgehaltenen bzw. zurückgehaltenen Repräsentation auf Zuordenbarkeit bzw. Übereinstimmung überprüft wird. Durch diese Maßnahmen können insbesondere wesentliche Teile der Verarbeitung aufseiten der Steuervorrichtung CTR verzögert werden, also insbesondere in einen Zeitraum umgelegt werden, in dem mehr Rechnerressourcen zur Verfügung stehen als zum Zeitpunkt des Empfangs der Bestätigungsnachricht. Alternativ können wesentliche Teile der Verarbeitung aufseiten der Steuervorrichtung CTR auch in einen Zeitraum umgelegt werden, in dem Rechnerressourcen für längere Zeit nicht anderweitig benötigt werden.

## Beschreibung

### Technisches Gebiet

Die Erfindung betritt ein Verfahren zur integritätssichernden Übertragung mindestens eines Messdatums.

### Technischer Hintergrund

Im Stand der Technik sind Verfahren zur integritätssichernden Übertragung von Messdaten bekannt, welche sicherstellen oder zumindest plausibilisieren, dass ein Messdatum unverfälscht, unverändert und/oder authentisch übertragen wurde. Technische Maßnahmen zur Sicherstellung der Integrität zielen meist darauf ab, fehlerhafte Daten als solche erkennen zu können und gegebenenfalls eine erneute Datenübertragung durchzuführen. Eine einfache Möglichkeit zum Schutz vor Übertragungsfehlern ist eine Prüfsumme, die mitübertragen wird und den Empfänger erkennen lässt, ob die Daten verändert wurden. Diese bekannte Prüfsumme schützt allerdings nicht vor absichtlicher oder böswilliger Veränderung bzw. Manipulation von Messdaten.

Bekannte Maßnahmen zur integritätssichernden Übertragung werden oft auf Basis exklusiver Punkt-Zu-Punkt Verbindungen gelöst und beinhalten daher eine Separierung von der Übertragungssicherung von den eigentlichen technischen Aufgaben beteiligter Geräte, insbesondere Mess- und Anzeigenaufgaben. Weiterhin erfordern diese Maßnahmen einen Einsatz spezieller oder leistungsstärkerer Komponenten, wodurch die Systemarchitektur der Geräte nur eine geringe Flexibilität aufweist, um zum Beispiel Aktualisierungen der Geräte-Firmware in Form so genannter Over-the-Air-Updates zu realisieren.

### Zusammenfassung der Erfindung

Aufgabe der Erfindung ist es, ein Verfahren zur integritätssichernden Übertragung anzugeben, welches die zu Sicherung der Übertragungsintegrität erforderlichen Maßnahmen zur Einrichtung und Verifizierung der Integrität gegenüber bekannten Verfahren stärker von Seiten der Zusatzvorrichtung als maßgeblichen Empfänger von Messdaten auf die Steuervorrichtung als hauptsächlicher Quelle der Messdaten verlagert.

Die der Erfindung zugrundeliegende Aufgabe wird durch ein Verfahren zur integritätssichernden Übertragung mindestens eines Messdatums von einer Steuervorrichtung an zumindest eine mit der Steuervorrichtung kommunikativ verbundene Zusatzvorrichtung mit den Merkmalen des Patentanspruchs 1 gelöst. Das erfindungsgemäße Verfahren umfasst folgende vorzugsweise seitens der Steuervorrichtung ohne Beachtung der Reihenfolge durchzuführenden Schritte:
- Erheben mindestens eines zumindest das Messdatum umfassenden Messdatensatzes;
- Erzeugen und Vorhalten einer kryptographisch gesicherten ersten Repräsentation des Messdatensatzes in der Steuervorrichtung;
- Senden mindestens einer den mindestens einen Messdatensatz enthaltenden und kryptographisch ungesicherten Übertragungsnachricht an die Zusatzvorrichtung;
- Empfangen einer - insbesondere in Antwort auf die Übertragungsnachricht gesendeten - Bestätigungsnachricht - welche optional daraufhin überprüft werden kann, ob diese in Antwort auf die mindestens eine Übertragungsnachricht gesendet wurde - von der Zusatzvorrichtung, die Bestätigungsnachricht zumindest enthaltend eine kryptographisch gesicherte zweite Repräsentation eines Messdatensatzes;
- Prüfung einer Zuordenbarkeit - insbesondere Identität bzw. Übereinstimmung - der empfangenen kryptographisch gesicherten zweiten Repräsentation mit der in der Steuervorrichtung vorgehaltenen kryptographisch gesicherten ersten Repräsentation des Messdatensatzes;
- Verifizieren einer Integrität des gesendeten Messdatensatzes anhand eines positiven Ergebnisses der Prüfung.

Ein besonderer Vorteil des erfindungsgemäßen Verfahrens gegenüber bekannten Methoden zur integritätssichernden Übertragung von Messdaten - etwa in Form einer bekannten Anwendung von Prüfsummen - besteht darin, dass die Integrität der Übertragung erfindungsgemäß durch den Sender - also der Steuervorrichtung - verifiziert wird und nicht durch den Empfänger.

Ein besonderer Vorteil des erfindungsgemäßen Verfahrens besteht darin, dass komplexe und rechenintensive kryptografischer Operationen - inklusive der hiermit in Verbindung stehenden Wartungsaufgaben wie Schlüsselrotation, etc. - vorwiegend senderseitig, also auf Seiten der Steuervorrichtung, implementiert werden. Die Zusatzvorrichtung auf Empfängerseite hat eine demgegenüber weniger rechenintensive Obliegenheit, eine Bestätigungsnachricht zu bilden, welche eine kryptographisch zweite Repräsentation, beispielsweise eine Signatur, eines Messdatensatzes enthält. Beispielhaft erläutert muss die Empfängerseite also lediglich eine Richtung einer Einwegfunktion durchführen - also beispielweise einen kryptographischen Hashwert bilden und/oder eine Signatur bilden, also beispielsweise den Hashwert mit einem privaten Signaturschlüssel eines asymmetrischen Schlüsselpaares verschlüsseln - aber nicht die rechenressourcenaufwändigere Gegenrichtung dieser Einwegfunktion - im Sinne beispielsweise einer Entschlüsselung - berechnen.

Ein weiterer Vorteil des erfindungsgemäßen Verfahrens besteht darin, dass die auf Senderseite durchzuführenden Schritte einer Prüfung einer Zuordenbarkeit der empfangenen kryptographisch gesicherten zweiten Repräsentation mit der in der Steuervorrichtung vorgehaltenen kryptographisch gesicherten ersten Repräsentation des Messdatensatzes und einer Verifizierung der Integrität des gesendeten Messdatensatzes auch zeitlich so verschoben werden können, dass diese in eine Zeit fallen, in der Rechenressourcen in ausreichendem Umfang und/oder ausreichend lange für eine exklusive Nutzung zur Verfügung stehen, sodass kein Wechsel zwischen unterschiedlichen Prozessen erforderlich ist.

Ein weiterer Vorteil des erfindungsgemäßen Verfahrens besteht darin, dass keine exklusive Kommunikationskanäle oder gar Punkt-Zu-Punkt-Verbindungen erforderlich sind. Eine Separierung der Mess- und Anzeigenaufgaben von der Sicherung der Übertragung ist nicht erforderlich.

Der Fachmann versteht, dass eine zeitliche Durchführung der erfindungsgemäßen Verfahrensschritte nicht notwendigerweise durch die Reihenfolge der anspruchsgemäßen Formulierung der Verfahrensschritte festgelegt ist. So kann beispielsweise ein Erzeugen und ein Vorhalten der kryptographisch gesicherten ersten Repräsentation des Messdatensatzes in der Steuervorrichtung alternativ auch nach dem Senden der Übertragungsnachricht an die Zusatzvorrichtung, nach dem Empfangen der Bestätigungsnachricht von der Zusatzvorrichtung oder vor Prüfung der Zuordenbarkeit der empfangenen kryptographisch gesicherten zweiten Repräsentation erfolgen.

### Ausgestaltungen der Erfindung

Gemäß einer vorteilhaften Ausgestaltung des erfindungsgemäßen Verfahrens ist vorgesehen, die kryptographisch gesicherten Repräsentation mit einem kryptographischen Hashfunktion oder mit einer digitalen Signatur zu erzeugen.

Gemäß einer vorteilhaften Ausgestaltung des erfindungsgemäßen Verfahrens ist vorgesehen, dass die empfangene kryptographisch gesicherte zweiten Repräsentation vor Prüfung der Zuordenbarkeit entschlüsselt wird. Dabei kann vorteilhaft vorgesehen sein, eine Signatur mittels eines zugehörigen öffentlichen Schlüssels in einen Hash im Klartext überzuführen um diesen mit der kryptographisch gesicherten erste Repräsentation, beispielsweise einer zurückbehaltene gehashte Datenkopie des Messdatensatzes oder einer zurückbehaltenen signierten Datenkopie des Messdatensatzes, zu vergleichen.

Gemäß einer vorteilhaften Ausgestaltung des erfindungsgemäßen Verfahrens ist vorgesehen, dass nach Verifizieren der Integrität des gesendeten Messdatensatzes die empfangene kryptographisch gesicherten zweite Repräsentation mit einem der Steuervorrichtung zuordenbaren privaten Signaturschlüssel signiert und an die Zusatzvorrichtung gesendet wird. Dieser zusätzlicher Schritt kann vorteilhaft sein, um der Zusatzeinrichtung eine kryptographisch gesicherte Zusicherung darüber zu geben, dass eine Verifizierung der Übertragungsintegrität seitens der Steuervorrichtung erfolgt ist.

Gemäß einer vorteilhaften Ausgestaltung des erfindungsgemäßen Verfahrens ist vorgesehen, dass die von der Zusatzvorrichtung empfangene Bestätigungsnachricht in Antwort auf die Übertragungsnachricht gesendet wird. Gemäß einer weiteren vorteilhaften Ausgestaltung des erfindungsgemäßen Verfahrens ist vorgesehen, dass nach Empfang der Bestätigungsnachricht überprüft wird, ob diese in Antwort auf eine der mindestens einen Übertragungsnachrichten gesendet wurde. Diese Ausgestaltungen können einerseits eine tautologische Zusammenfassung dessen sein, was die Lehre des Patenanspruchs insgesamt und abschließend mit der Prüfung der Zuordenbarkeit ohnehin bewirkt, andererseits können Weiterbildungen mit zusätzlicher Anwendung einer oder beider vorteilhafter Ausgestaltung zusätzliche Vorteile bilden, insbesondere wenn mehrere Übertragungsnachrichten gesendet werden und die zugehörigen Bestätigungsnachrichten versetzt eintreffen oder zeitlich versetzt ausgewertet werden.

Gemäß einer vorteilhaften Ausgestaltung des erfindungsgemäßen Verfahrens ist vorgesehen, dass die Prüfung der Zuordenbarkeit eine Prüfung einer Identität oder einer Übereinstimmung umfasst.

### Kurzbeschreibung der Zeichnung

Im Folgenden werden weitere Ausführungsbeispiele und Vorteile der Erfindung anhand der Zeichnung näher erläutert. Dabei zeigen:
- Fig. 1:: eine schematische Ausschnittdarstellung umfassend eine Steuervorrichtung und eine Zusatzvorrichtung;
- Fig. 2:: eine schematische Darstellung einer ersten Ausführungsform des erfindungsgemäßen Verfahrens;
- Fig. 3:: eine schematische Darstellung einer zweiten Ausführungsform des erfindungsgemäßen Verfahrens;
- Fig. 4:: eine schematische Darstellung einer dritten Ausführungsform des erfindungsgemäßen Verfahrens;
- Fig. 5:: eine schematische Darstellung einer vierten Ausführungsform des erfindungsgemäßen Verfahrens; und;
- Fig. 6:: eine schematische Darstellung einer fünften Ausführungsform des erfindungsgemäßen Verfahrens;

### Beschreibung von Ausführungsbeispielen

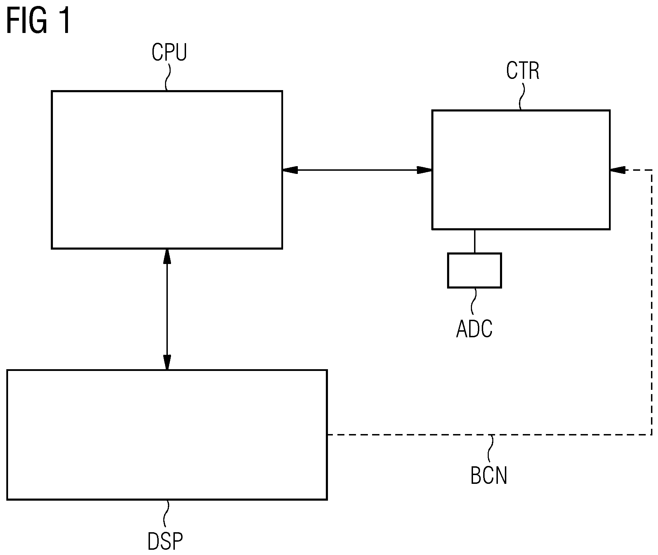

FIG 1 zeigt eine erfindungsgemäße Steuervorrichtung CTR, welche beispielsweise über einen Analog-Digital-Wandler ADC eines oder mehrere Messdaten bezieht. Der Analog-Digital-Wandler ADC kann entweder, wie in der Zeichnung dargestellt, extern mit der Steuervorrichtung CTR verbunden sein, oder intern in der Steuervorrichtung CTR integriert sein. Von einer detaillierteren zeichnerischen Darstellung wird zugunsten einer prägnanten Darstellung abgesehen.

Die Steuervorrichtung CTR ist in diesem Ausführungsbeispiel beispielswiese als Mikrocontroller innerhalb eines Messgeräts ausgeführt. Über eine bidirektionale Datenverbindung ist die Steuervorrichtung CTR mit einer Vermittlungsvorrichtung CPU verbunden. Diese Vermittlungsvorrichtung CPU kann beispielweise als Datenbus, als industrieller Datenbus oder auch als beliebiger elektronischer Baustein CPU ausgeführt sein, durch welchen eine intermediäre Datenverbindung zwischen der Steuervorrichtung CTR und einer Zusatzvorrichtung DSP eingerichtet oder betrieben wird. Die Zusatzvorrichtung DSP ist in einer einfachsten Ausgestaltung eine Ausgabevorrichtung, beispielsweise ein Display, durch welches von der Steuervorrichtung CTR erhobene Messdaten zur Anzeige gebracht werden.

Eine gestrichelt dargestellte Linie verbindet die Zusatzvorrichtung DSP mit der Steuervorrichtung CTR. Auf die mit der gestrichelt dargestellten Linie eingerichtete Datenverbindung BCN wird im Folgenden auch als Rückverbindung BCN eingegangen.

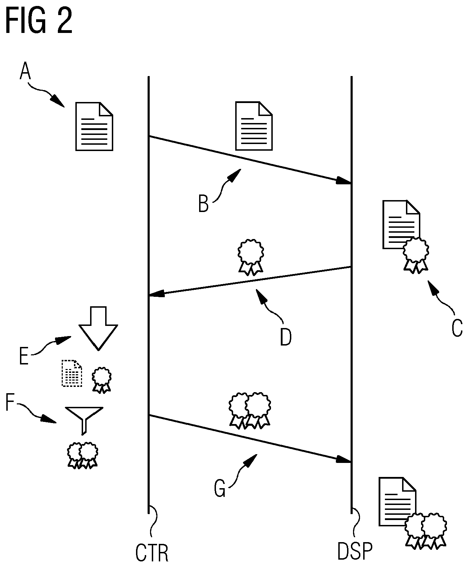

In FIG 2 ist ein beispielhafter Austausch von Steuernachrichten, insbesondere Übertragungs- und Bestätigungsnachrichten, zwischen einer Steuervorrichtung CTR und einer Zusatzvorrichtung DSP in Form eines Ablaufdiagramms dargestellt. Auf eine vermittelnde Funktion der Vermittlungsvorrichtung CPU wird in der Darstellung der Figur 2 aus Übersichtsgründen nicht weiter eingegangen. Es werden also lediglich die Endpunkte des Nachrichtenaustauschs, also die Steuervorrichtung CTR und die Zusatzvorrichtung DSP betrachtet.

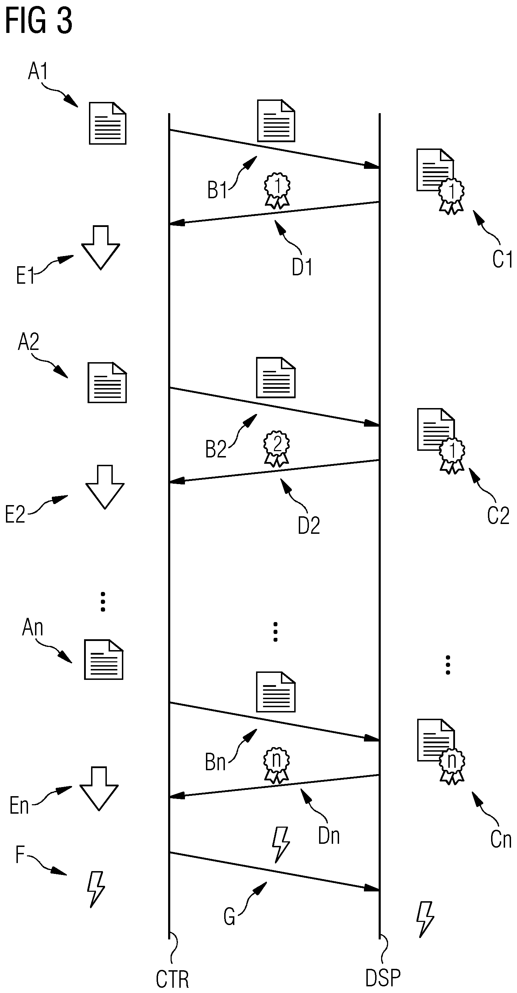

In der Darstellung des Ablaufdiagramms gemäß FIG 2 und der darauffolgenden Figuren 3 bis 6 sind aufeinanderfolgende Zeitpunkte chronologisch so geordnet, dass spätere Zeitpunkte weiter unten dargestellt sind als frühere Zeitpunkte. Für jede der Funktionseinheiten CTR, DSP ist jeweils eine vertikale Linie eingezeichnet, um den Nachrichtenaustausch dieser Funktionseinheiten CTR, DSP in Bezug auf den jeweiligen Sende- oder Empfangszeitpunkt unter Berücksichtigung der fortschreitenden Zeit darzustellen.

In einem ersten Schritt des beispielhaften Verfahrens wird ein Messdatensatz A erhoben. In einem zweiten Schritt B wird der Messdatensatz in einer kryptografisch ungesicherten Übertragungsnachricht an die Zusatzvorrichtung DSP gesendet. Der Messdatensatz wird also beispielsweise unverändert in einen Datenrahmen, in ein Datenpaket oder in eine Datei eingefügt und diese an die Zusatzvorrichtung DSP gesendet.

Die kryptografisch ungesicherte Übertragungsnachricht wird an der Zusatzvorrichtung DSP empfangen und der kryptografisch ungesicherte Messdatensatz aus der Übertragungsnachricht entnommen. In einem darauffolgenden Verfahrensschritt C wird der Messdatensatz von Seiten der Zusatzvorrichtung DSP in eine kryptografisch gesicherte Repräsentation überführt, welche im Folgenden auch als kryptografisch gesicherte zweite Repräsentation des Messdatensatzes bezeichnet wird. Eine solche kryptografisch gesicherte zweite Repräsentation kann durch Bildung eines Hashwerts und/oder durch Signatur des Messdatensatzes mit dem der Zusatzvorrichtung DSP zugeordneten privaten Schlüssel eines asymmetrischen Signaturschlüsselpaares erfolgen.

In einem darauffolgenden Verfahrensschritt D wird die kryptografisch gesicherte zweite Repräsentation des Messdatensatzes in eine ansonsten kryptografisch ungesicherte Bestätigungsnachricht eingefügt, welche an die Steuervorrichtung CTR gesendet wird. In einem darauffolgenden Verfahrensschritt E wird die kryptografisch gesicherte zweite Repräsentation des Messdatensatzes aus der Bestätigungsnachricht entnommen und, abhängig vom jeweiligen Ausführungsbeispiel, einer weiteren Bearbeitung zugeführt. Eine solche weitere Bearbeitung kann beispielsweise darin bestehen, dass die Signatur der kryptografisch gesicherten zweiten Repräsentation unter Heranziehung eines zugehörigen öffentlichen Schlüssels der Zusatzvorrichtung DSP entschlüsselt und in eine Hash-Repräsentation in Klartext überführt wird.

In einem weiteren Schritt kann auch eine kryptografisch gesicherte erste Repräsentation des in der Steuervorrichtung CTR vorgehaltenen Messdatensatzes erzeugt werden, sofern diese nicht bereits vorher erzeugt wurde. Im letzteren Fall wird die vorgehaltene Repräsentation verwendet. Alternativ wird der zurückbehaltene Messdatensatz zu diesem Zeitpunkt in eine kryptografisch gesicherte erste Repräsentation - beispielsweise in Form eines Hashwerts - überführt. In einem darauffolgenden Verfahrensschritt F erfolgt eine Prüfung einer Zuordenbarkeit der empfangenen kryptografisch gesicherten zweiten Repräsentation mit der in der Steuervorrichtung CTR vorgehaltenen kryptografisch gesicherten ersten Repräsentation des Messdatensatzes. Falls eine Zuordenbarkeit, d.h. beispielsweise eine Identität, beider Repräsentationen gegeben ist, ist oder wird die Integrität des ursprünglich gesendeten Messdatensatzes bestätigt.

Das erfindungsgemäße Verfahren ist so gestaltet, dass eine Reihenfolge der Verfahrensschritte im Wesentlichen beliebig ist. Dies bedeutet, dass die beschriebenen Verfahrensschritte auch in einer anderen Reihenfolge oder in weiten Teilen parallel durchgeführt werden können. Je nach Ausführungsform umfasst das Verfahren einen ersten Schritt, in dem der Messdatensatz kryptografisch ungesichert übertragen wird und anschließend nach und nach in andere Repräsentationen übergeführt werden, bis schließlich eine kryptografisch gesicherte Repräsentation erzeugt wird, welche mit einer Repräsentation der in der Steuervorrichtung CTR vorgehaltenen bzw. zurückgehaltenen Repräsentation auf Zuordenbarkeit bzw. Übereinstimmung überprüft wird. Durch diese Maßnahmen können insbesondere wesentliche Teile der Verarbeitung aufseiten der Steuervorrichtung CTR verzögert werden, also insbesondere in einen Zeitraum umgelegt werden, in dem mehr Rechnerressourcen zur Verfügung stehen als zum Zeitpunkt des Empfangs der Bestätigungsnachricht. Alternativ können wesentliche Teile der Verarbeitung aufseiten der Steuervorrichtung CTR auch in einen Zeitraum umgelegt werden, in dem Rechnerressourcen für längere Zeit nicht anderweitig benötigt werden.

Auf Empfängerseite, d. h. auf Seiten der Zusatzvorrichtung DSP, werden empfangene Messdatensätze oder hieraus abgeleitete Repräsentationen in eine kryptografisch gesicherte Repräsentation überführt. Diese kryptografisch gesicherte Repräsentation kann eine kryptografische Signatur sein, aber auch eine Zusammenfassung des Datensatzes, z. B. in Form eines kryptografischen Hashwertes, welcher sodann über eine sichere Verbindung - nicht notwendigerweise kryptographisch gesicherte Verbindung - übermittelt werden kann.

Eine solche sichere Verbindung kann beispielsweise die in Figur 1 gezeigte gesicherte Rückverbindung BCN sein. Die gesicherte Rückverbindung BCN kann insbesondere eine Punkt-zu-Punkt-Verbindung sein. Ebenfalls denkbar ist eine Verwendung einer überwachten Kommunikationsschnittstelle wie z.B. eines CAN-Busses. Eine weitere mögliche Ausprägung dieser Rückverbindung ist eine optische Schnittstelle bestehend aus einer Leuchtdiode und einem Fototransistor. Die kryptografisch gesicherte Repräsentation wird dann an die Senderseite übertragen, wo überprüft wird, dass diese den dort vorliegenden Daten entspricht. In Abhängigkeit des Prüfungsergebnisses zur Verifikation der Übertragungsintegrität kann eine mit der Datenübertragung in Verbindung stehende Aktion durchgeführt werden, im einfachsten Fall eine Ausgabe einer Bestätigung.

FIG 3 zeigt beispielhaft eine Übertragung mehrerer Messdatensätze A1,...,An von der Steuervorrichtung CTR an die Zusatzvorrichtung DSP. Die Zusatzvorrichtung DSP erzeugt in dem in der Figur 3 gezeigten Ausführungsbeispiel eine jeweils kryptografisch gesicherte zweite Repräsentation des jeweils empfangenen Messdatensatzes, welche jeweils nach Empfang der Übertragungsnachricht B1,...,Bn erfolgt.

Die Zusatzvorrichtung DSP bildet in einem jeweiligen Verfahrensschritt C1,...,Cn eine jeweils kryptografisch gesicherte zweite Repräsentation, beispielsweise einen Hashwert, des jeweils empfangenen Messdatensatzes.

In einem darauffolgenden jeweiligen Verfahrensschritt wird die jeweilige kryptografisch gesicherte zweite Repräsentation des Messdatensatzes in eine ansonsten kryptografisch ungesicherte Bestätigungsnachricht D1,...,Dn eingefügt, welche an die Steuervorrichtung CTR gesendet wird. In einem darauffolgenden Verfahrensschritt jeweiligen E1,...,En wird die kryptografisch gesicherte zweite Repräsentation des Messdatensatzes von der Steuervorrichtung CTR aus der jeweils empfangenen Bestätigungsnachricht entnommen und einer weiteren Bearbeitung zugeführt.

In einem darauffolgenden Verfahrensschritt F erfolgt eine Prüfung einer Zuordenbarkeit der jeweils empfangenen kryptographisch gesicherten zweiten Repräsentation mit der in der Steuervorrichtung CTR vorgehaltenen kryptographisch gesicherten ersten Repräsentation des Messdatensatzes. Abhängig von einem Ergebnis der Prüfung der Zuordenbarkeit wird die Integrität kumulativ - d.h. über alle Repräsentation des Messdatensatzes - entweder verifiziert oder falsifiziert. Im dargestellten Fall eines falsifizierenden Verfahrensschritts F kann in einem Verfahrensschritt G eine Sperrmeldung an die Zusatzeinrichtung DSP abgesetzt werden, auf Seiten welcher aufgrund der nicht gegebenen Integrität in einem der beschriebenen Datenübertragungen gegebenenfalls weitere Maßnahmen eingeleitet werden, beispielsweise eine Sperrung der Anzeige für die nicht-integren Messwerte.

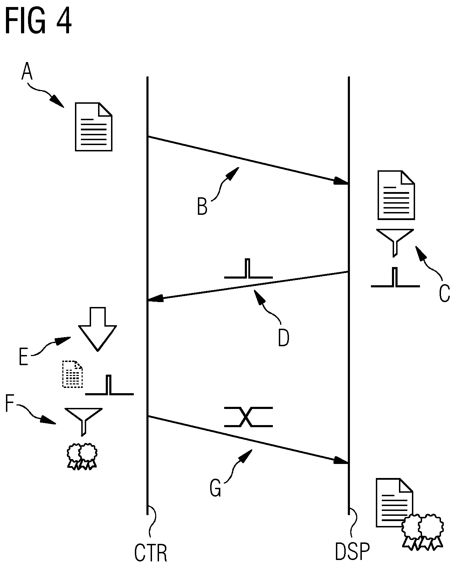

FIG 4 zeigt eine weitere Ausführungsvariante, welche sich von den vorgenannten Verfahren dadurch unterscheidet, dass die zurückgesendete kryptografisch gesicherte zweite Repräsentation des Messdatensatzes D einen geringeren Umfang einnimmt als bei den vorgenannten Ausführungsbeispielen gemäß der Figuren 2 bis 3. In dem in FIG 4 dargestellten Ausführungsbeispiel wird der in Schritt B von Seiten der Zusatzvorrichtung DSP empfangene Messdatensatz in eine kryptografisch gesicherte zweite Repräsentation C überführt und von Seiten der Zusatzvorrichtung DSP überprüft, ob diese zweite Repräsentation C mit einer erwarteten Repräsentation übereinstimmt. Ist dies der Fall, wird in einem darauffolgenden Verfahrensschritt D ein Bestätigungsimpuls bzw. Acknowledge-Impuls D über eine Rückverbindung, beispielsweise über die in FIG 1 gezeigte gesicherte Rückverbindung BCN oder eine anderweitig gesicherte Datenverbindung gesendet, indem beispielsweise kurzzeitig eine LED einer optischen Übertragungsstrecke geschaltet wird.

Der Verfahrensschritt E könnte konzeptionell im weitesten Sinne der Bestimmung einer Parität entsprechen. Bei Auswertung eines Bits müsste jedoch durchschnittlich ein Impuls je zwei Nachrichten übertragen werden, bei einem Byte noch ein Impuls je 256 Nachrichten und bei 2 Bytes ein Impuls je 65.536 Nachrichten. Die Nutzung beispielsweise eines vollen SHA256-Hashwerts könnte sich aufgrund der wenigen Impulse im Verhältnis zur Anzahl übertragener Nachrichten (etwa 1:10⁷⁷) als weniger günstig erweisen. Im Verfahrensschritt E ist es daher vorteilhafter, eine zurückbehaltene Repräsentation des Messdatensatzes A mittels einer Hashfunktion in einen Hashwert zu überführen und dabei im Rahmen einer Prüfung einer Zuordenbarkeit des oder der empfangenen Bestätigungsimpulse mit der zurückbehaltenen Repräsentation des Messdatensatzes A zu ermitteln, wann ein Impuls und ggf. wie viele Impulse zu erwarten sind.

In einem Verfahrensschritt F zur Verifikation der Integrität wird schließlich kumuliert festgestellt, ob alle oder zumindest mehrere erwartete Bestätigungsimpulse erwartungsgemäß eingetroffen sind. Abhängig von einem positiven Ergebnis der Prüfung wird optional ein Verfahrensschritt G ausgeführt, gemäß dem beispielweise eine Invertierung eines Ausgangssignals auf einem CAN Bus (Controller Area Network) oder auf einem CSMA/CR Kanal (Carrier Sense Multiple Access/Collision Resolution) eines Feldbusses veranlasst wird, um auf den verifizierenden Verfahrensschritt F in einem folgenden Verfahrensschritt G eine Freigabemeldung an die Zusatzeinrichtung DSP abzusetzen, auf Seiten welcher aufgrund der gegebenen Integrität gegebenenfalls weitere Maßnahmen eingeleitet werden, beispielsweise eine Anzeige für die integren Messwerte.

In einer - zeichnerisch nicht dargestellten - Variante der in Figur 4 gezeigten Ausführungsform werden im Verfahrensschritt C Teile der im Verfahrensschritt B übertragenen Übertragungsnachricht als Nachricht im Sinne des Verfahrensschritts C genutzt. So kann beispielsweise das Verfahren gemäß Schritt C auf Bytes basieren und hierzu die Nachrichten aus Schritt B in Bytes zerlegt werden.

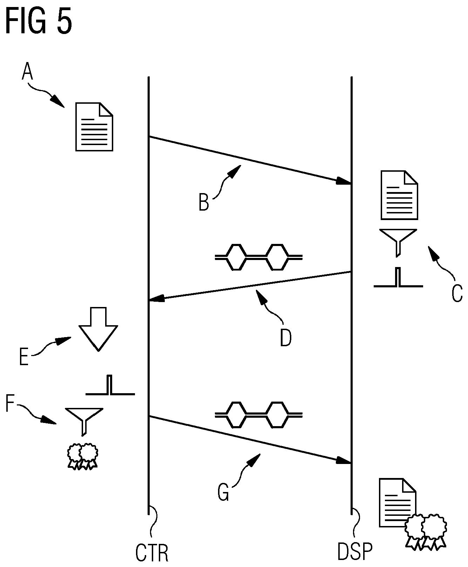

FIG 5 zeigt eine weitere Ausführungsform, welche sich von den vorgenannten Ausführungsformen insbesondere dadurch unterscheidet, dass diese in vorteilhafter Weise zur Anwendung in einem CAN-Bus geeignet ist. In dem in FIG 5 dargestellten Ausführungsbeispiel wird der in Schritt B von Seiten der Zusatzvorrichtung DSP empfangene Messdatensatz in eine kryptografisch gesicherte zweite Repräsentation C überführt und von Seiten der Zusatzvorrichtung DSP überprüft, ob diese zweite Repräsentation C mit einer erwarteten Repräsentation übereinstimmt. Ist dies der Fall, wird in einem darauffolgenden Verfahrensschritt D die kryptografisch gesicherte zweite Repräsentation des Messdatensatzes in eine ansonsten kryptografisch ungesicherte Bestätigungsnachricht eingefügt, welche über einen CAN-Bus an die Steuervorrichtung CTR gesendet wird. Das Senden der Bestätigungsnachricht im Verfahrensschritt D bedeutet in diesem Fall, dass die kryptografisch gesicherte zweite Repräsentation des Messdatensatzes an den CAN-Bus übergeben wird, welcher von Seiten der Steuervorrichtung CTR auf übertragene Daten kontrolliert wird.

In einem darauffolgenden Verfahrensschritt E wird die kryptografisch gesicherte zweite Repräsentation des Messdatensatzes aus dem CAN-Bus entnommen und einer weiteren Bearbeitung zugeführt. Eine solche weitere Bearbeitung kann beispielsweise darin bestehen, dass die Signatur der kryptografisch gesicherten zweiten Repräsentation unter Heranziehung eines zugehörigen öffentlichen Schlüssels der Zusatzvorrichtung DSP entschlüsselt und in eine Hash-Repräsentation in Klartext überführt wird.

In einem darauffolgenden Verfahrensschritt F erfolgt eine Prüfung einer Zuordenbarkeit der jeweils empfangenen kryptographisch gesicherten zweiten Repräsentation mit der in der Steuervorrichtung CTR vorgehaltenen kryptographisch gesicherten ersten Repräsentation des Messdatensatzes. Abhängig von einem Ergebnis der Prüfung der Zuordenbarkeit wird die Integrität der Übertragung über den CAN-Bus entweder verifiziert oder falsifiziert. Im dargestellten Fall eines verifizierenden Verfahrensschritts F kann in einem Verfahrensschritt G eine Freigabemeldung an die Zusatzeinrichtung DSP abgesetzt werden, auf Seiten welcher aufgrund der nicht gegebenen Integrität in einem der beschriebenen Datenübertragungen gegebenenfalls weitere Maßnahmen eingeleitet werden, beispielsweise eine Freigabe der Anzeige für die integren Messwerte. Die Freigabe erfolgt im Fall des CAN-Busses beispielsweise, wie zeichnerisch dargestellt, über eine Invertierung eines Ausgangssignals am CAN-Bus.

In einer zeichnerisch nicht dargestellten Variante senden die Steuervorrichtung CTR und die Zusatzvorrichtung DSP gleichzeitig die jeweilige kryptographisch gesicherte Repräsentation des Messdatensatzes und ermitteln, ob eine Kollision auftritt. Auf diese Weise können beide Seiten gleichzeitig beurteilen, ob es zu einer Abweichung kam.

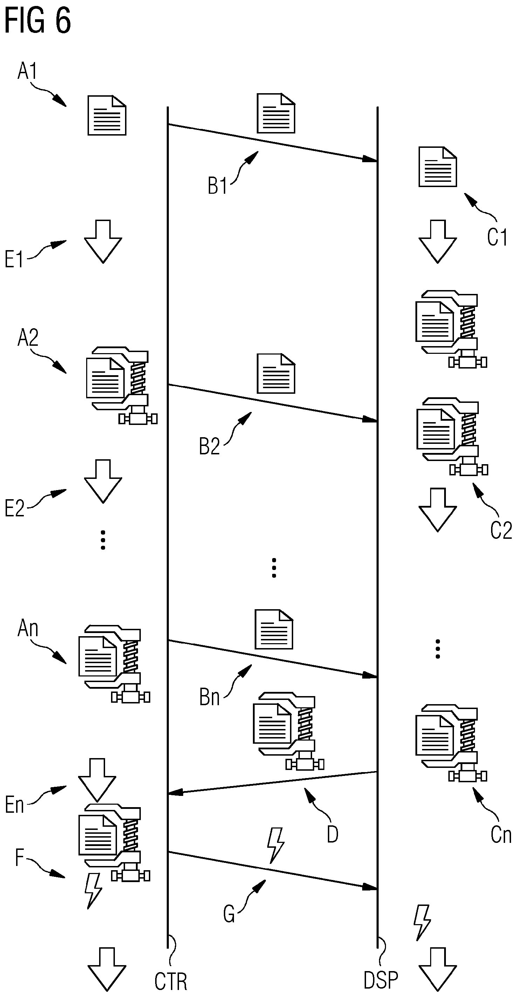

FIG 6 zeigt eine weitere Ausführungsform, für welche insbesondere die aus Figur 1 gezeigte Vermittlungsvorrichtung CPU in vorteilhafter Weise eingesetzt werden kann. Diese Ausführungsform unterscheidet sich von den vorgenannten Ausführungsformen insbesondere dadurch, dass die Verfahrensschritte A1,...,An; B1,...,Bn; C1,...,Cn und E1,...,En; mehrfach - z.B. n-fach, wie zeichnerisch dargestellt - durchgeführt werden, die Verfahrensschritte D, F, G jedoch nur einfach. Diese Ausführungsform soll das - selbstverständlich auch auf die vorausgenannten Ausführungsformen anwendbare - Prinzip verdeutlichen, dass die dass die Abarbeitung der Verfahrensschritte auch stream-orientiert, d.h. auf unterschiedliche großen Teilmengen einer Gesamtdatenmenge erfolgen kann, wobei sich in den einzelnen mehrfachen Verfahrensschritte A1,...,An; B1,...,Bn; C1,...,Cn und E1,...,En ausgetauschten Nachrichten selbstverständlich Kanalcodierungen und andere Nutzdaten ändern können und somit auch Datenmengen in den einzelnen Verfahrensabschnitten veränderlich sind.

Ein wesentlicher Vorteil der Erfindung besteht darin, einen bislang bekannten Integritätsschutz, welcher auf Seiten eines Empfängers realisiert wird, durch eine nachgelagerte Integrationsprüfung von Seiten der sendenden Steuervorrichtung CTR zu ersetzen.

Durch eine geeignete Wahl von Ablaufdauern der verwendeten kryptografischen Materialien kann eine Kopplung eines Zeitpunkts einer notwendigen Erneuerung von kryptografischen Schlüsseln, Zertifikaten etc. an vorhandene Fristen zur - beispielsweise eichrechtlichen - Überprüfung gewährleistet werden. Bei einer Ausführung der Steuervorrichtung CTR als Microcontroller und der Zusatzvorrichtung DSP als Anzeigevorrichtung kann die integritätssichernde Übertragung beispielsweise unter Verwendung einer Signatur in Verbindung mit einer Zertifikatskette, welche von einem Zertifikat abgeleitet ist, erfolgen. Der Microcontroller könnte beispielsweise so eingestellt sein, dass er dem Zertifikat vertraut und dass die Gültigkeit dieses Zertifikats auf die Ersteichfrist beschränkt ist. Ein dann notwendiger Schlüsseltausch kann durch Neuprogrammierung oder Austausch des Microcontrollers erfolgen, was eichrechtlich als erstmaliges Inverkehrbringen eines neuen Messgeräts zu qualifizieren sein könnte und somit keine Kosten für eine behördliche Überprüfung verursacht.

Die Erfindung betrifft zusammenfassend ein Verfahren zur integritätssichernden Übertragung mindestens eines Messdatums von einer Steuervorrichtung an zumindest eine mit der Steuervorrichtung kommunikativ verbundene Zusatzvorrichtung. Diese Übertragung erfolgt kryptographisch ungesichert. Auf Empfängerseite wird das Messdatum bzw. empfangene Messdatensätze oder hieraus abgeleitete Repräsentationen in eine kryptografisch gesicherte Repräsentation überführt. Diese kryptografisch gesicherte Repräsentation kann eine kryptografische Signatur sein, aber auch eine Zusammenfassung des Datensatzes, z. B. in Form eines kryptografischen Hashwertes, welcher sodann über eine sichere Verbindung - nicht notwendigerweise kryptographisch gesicherte Verbindung - übermittelt werden kann. Je nach Ausführungsform umfasst das Verfahren einen ersten Schritt, in dem der Messdatensatz kryptografisch ungesichert übertragen wird und anschließend nach und nach in andere Repräsentationen übergeführt werden, bis schließlich eine kryptografisch gesicherte Repräsentation erzeugt wird, welche mit einer Repräsentation der in der Steuervorrichtung CTR vorgehaltenen bzw. zurückgehaltenen Repräsentation auf Zuordenbarkeit bzw. Übereinstimmung überprüft wird. Durch diese Maßnahmen können insbesondere wesentliche Teile der Verarbeitung aufseiten der Steuervorrichtung CTR verzögert werden, also insbesondere in einen Zeitraum umgelegt werden, in dem mehr Rechnerressourcen zur Verfügung stehen als zum Zeitpunkt des Empfangs der Bestätigungsnachricht. Alternativ können wesentliche Teile der Verarbeitung aufseiten der Steuervorrichtung CTR auch in einen Zeitraum umgelegt werden, in dem Rechnerressourcen für längere Zeit nicht anderweitig benötigt werden.

## Patentansprüche

1. Verfahren zur integritätssichernden Übertragung mindestens eines Messdatums von einer Steuervorrichtung (CTR) an zumindest eine mit der Steuervorrichtung (CTR) kommunikativ verbundene Zusatzvorrichtung (DSP), das Verfahren umfassend folgende Schritte:
- Erheben mindestens eines Messdatensatzes;
- Erzeugen und Vorhalten einer kryptographisch gesicherten ersten Repräsentation des Messdatensatzes in der Steuervorrichtung (CTR);
- Senden mindestens einer den mindestens einen Messdatensatz enthaltenden und kryptographisch ungesicherten Übertragungsnachricht an die Zusatzvorrichtung (DSP);
- Empfangen einer Bestätigungsnachricht von der Zusatzvorrichtung (DSP), die Bestätigungsnachricht zumindest enthaltend eine kryptographisch gesicherte zweite Repräsentation eines Messdatensatzes;
- Prüfung einer Zuordenbarkeit der empfangenen kryptographisch gesicherten zweiten Repräsentation mit der in der Steuervorrichtung (CTR) vorgehaltenen kryptographisch gesicherten ersten Repräsentation des Messdatensatzes;
- Verifizieren einer Integrität des gesendeten Messdatensatzes anhand eines positiven Ergebnisses der Prüfung.

2. Verfahren gemäß Patentanspruch 1, bei dem die kryptographisch gesicherten Repräsentation mit einem kryptographischen Hashfunktion oder mit einer digitalen Signatur erzeugt sind.

3. Verfahren gemäß einem der vorgenannten Patentansprüche 1 und 2, bei dem die empfangene kryptographisch gesicherte zweiten Repräsentation vor Prüfung der Zuordenbarkeit mittels eines der Zusatzvorrichtung (DSP) zuordenbaren öffentlichen Signaturschlüssel entschlüsselt wird.

4. Verfahren gemäß einem der vorgenannten Patentansprüche, bei dem nach Verifizieren der Integrität des gesendeten Messdatensatzes die empfangene kryptographisch gesicherten zweite Repräsentation mit einem der Steuervorrichtung (CTR) zuordenbaren privaten Signaturschlüssel signiert und an die Zusatzvorrichtung (DSP) gesendet wird.

5. Verfahren gemäß einem der vorgenannten Patentansprüche, bei dem die von der Zusatzvorrichtung (DSP) empfangene Bestätigungsnachricht in Antwort auf die Übertragungsnachricht gesendet ist.

6. Verfahren gemäß einem der vorgenannten Patentansprüche, bei dem nach Empfang der Bestätigungsnachricht überprüft wird, ob diese in Antwort auf eine der mindestens einen Übertragungsnachrichten gesendet wurde.

7. Verfahren gemäß einem der vorgenannten Patentansprüche, bei dem die Prüfung der Zuordenbarkeit eine Prüfung einer Identität oder einer Übereinstimmung umfasst.

8. Verfahren gemäß einem der vorgenannten Patentansprüche, bei dem die kryptographisch gesicherten Repräsentation mit einer digitalen Signatur in Verbindung mit einer von einem Zertifikat abgeleiteten Zertifikatskette erzeugt ist.

9. Verfahren gemäß Patentanspruch 8, bei dem eine anfänglich eingestellte Gültigkeit des besagten Zertifikats oder eines weiteren Zertifikats innerhalb der Zertifikatskette auf eine Ersteichfrist der Steuervorrichtung (CTR) und/oder der Zusatzvorrichtung (DSP) beschränkt ist.

10. Steuervorrichtung zur integritätssichernden Übertragung mindestens eines Messdatums an zumindest eine mit der Steuervorrichtung (CTR) kommunikativ verbundene Zusatzvorrichtung (DSP), die Steuervorrichtung (CTR) eingerichtet zur Durchführung eines Verfahrens gemäß einem der vorgenannten Patentansprüche 1 bis 7.

11. Zusatzvorrichtung zum integritätssichernden Empfang mindestens eines Messdatums von zumindest einer mit der Zusatzvorrichtung (DSP) kommunikativ verbundenen Steuervorrichtung (CTR), Zusatzvorrichtung (DSP) eingerichtet zur Durchführung eines Verfahrens gemäß einem der vorgenannten Patentansprüche 1 bis 7.
